# EUROPEAN PATENT SPECIFICATION

(11) **EP 0 895 513 B1**
(45) Date of publication and mention of the grant of the patent: **21.02.2001**
(21) Application number: 97918444.7
(22) Date of filing: 25.03.1997
(51) Int. Cl.: C04B 41/50, C09D 1/10

(54) **A METHOD OF APPLYING LIME PLASTER AND/OR LIME WASH PAINT AND A METHOD OF MAKING A BRICK STRUCTURE**
VERFAHREN ZUM AUFBRINGEN VON KALKPUTZ UND/ODER KALKFARBE UND VERFAHREN ZUR HERSTELLUNG VON MAUERWERK
PROCEDE D'APPLICATION D'UN ENDUIT DE CHAUX LISSE ET/OU D'UNE PEINTURE A LA CHAUX ET PROCEDE DE FABRICATION D'UNE STRUCTURE EN BRIQUES

(30) Priority: 14.04.1996 SE 9601439
(43) Date of publication of application: 10.02.1999
(73) Proprietor: Akesson, Knut, 775 96 Krylbo (SE)
(72) Inventor: Akesson, Knut, 775 96 Krylbo (SE)
(74) Representative: Aslund, Roland
(86) International application number: SE9700512
(87) International publication number: WO9738953

(56) References cited:
- DIALOG INFORMATION SERVICES, File 351, DERWENT WPI, Dialog Accession No. 002201266, "Soil Consolidation - Using Portland Cement Opt. Contg. Slaked Lime, Into Which Carbon Dioxide is Injected"; & JP,A,53 133 918, (22-11-78), 7901, (BASIC).

## Description

This invention relates to a method of applying lime plaster and/or lime wash paint in layers. It relates also to a method of making a brick structure.

Most plastered cultural buildings and other old buildings are originally plastered with lime plaster. When plastering with lime plaster, one can normally not make an individual build-up thicker than about 7 mm. Then, one have to wait several days before applying the next layer of plaster. In order to get good quality, the intervals between the operations have to be adjusted to the temperature and to the relative humidity of the air. Then, there must usually be an interval of about one month between the plastering and the painting. During that time, one must water the plaster regularly so that the plaster does not dry before being completely hardened. The quality of the painted plaster will therefore depend entirely on the craftsman's skill and attention and the quality or lack of quality will often not show until long.

Since it is so time consuming to use lime plaster and lime wash paint, and since the quality depends on skill, experience, and attention, cement based plaster and polymer based paint are nowadays usually used, which makes the next renovation difficult and expensive. Modern plaster is less elastic than lime plaster, which may cause cracking when modem plaster is applied on old buildings that have been built with lime mortar and lime plaster. In particular. modem plaster with polymeric additives may cause severe damage to old buildings.

It is an object of the invention to make it possible to apply lime plaster and lime wash paint in a way that is fast and makes it possible to provide for quality assurance. It is also an object to provide for an improved and fast method of making a brick structure, for example an arch, and to provide for quality assurance. To these ends, carbonated water is used in the way defined in the claims.

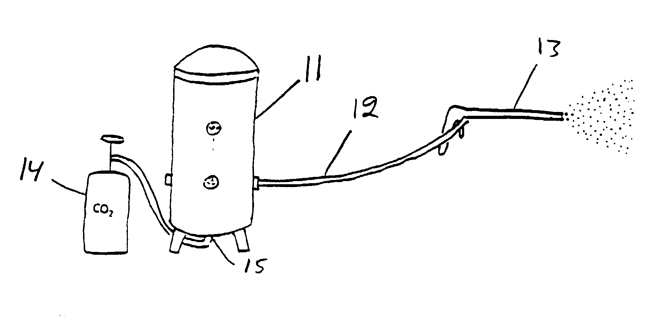

The invention will be described with reference to the drawing which shows a device for pressurising water with carbon dioxide and to spray the water on a wall or the like.

The Figure shows a conventional domestic pressure tank 11 of 200 - 300 litres to which a hose 12 with a spray gun 13 is coupled. A carbon dioxide bottle 14 is coupled at 15 to a diffusor at the bottom of the tank. The diffusor consists of a sintered filter, for example AGA 203007228 that is available on the market. This diffusor atomises the carbon dioxide so that it dissolves better in the water.

The tank 11 should preferably be filled to 70-80% with water and the carbon dioxide is added through a pressure reducing valve at a pressure of 0.5-0.7 Mpa.. The reducing valve maintains the pressure during the dissolvment and also during the spraying operation. Thus, the carbon dioxide is used as a drive medium for the spraying. Alternatively, an air compressor can be coupled instead of the carbon dioxide bottle to provide a drive medium during the spraying operation. Suitably, the carbon dioxide should be coupled to the water for hours, for example during 12 hours or more, before the spraying operation.

The plastering and painting of a building in accordance with a preferred way of implicating the invention will now be described.

At first, the spray gun 13 is used to spray the substructure, for example a brick wall or a wall with old lime plaster, with plain water or preferably with carbonated water before a priming with lime wash or thin lime plaster is made. The next day, the wall is again sprayed with carbonated water until the plaster is glossy but no water flows on the surface. Then. a layer of lime plaster is applied in the conventional way. The next day. the wall is again sprayed with carbonated water and another layer of lime plaster is applied if necessary. This operation is repeated each day until no further plaster build-up is needed. Each build-up is usually 5-10 mm. The last build-up is floated or receives its finish in any other conventional way.

Already the day after the floating, the wall can be sprayed with carbonated water and a first layer of lime wash paint can be applied since the repeated spraying with carbonated water makes the plaster harden not only from the surface but throughout. Conventionally, one has to wait a month before the plaster has hardened so that the painting operation can begin. The result will be good also when a paint is used that is thicker than conventional paint and only two or three layers of paint are applied. The wall is sprayed with carbonated water before each layer of paint is applied and suitably one layer is applied each day. Thus, each layer of paint is sprayed the day after it has been applied as is also the case with the plaster. By applying paint four times or less instead of seven or eight times as is conventional, one will make the painting less costly and the result will be at least as good as with the conventional process.

The paint can be applied in any conventional way for example by spraying, rolling or brushing.
After each watering with carbonated water, the tank 11 is again filled with water and pressurised with carbon dioxide so that the carbon dioxide bottle 14 will be coupled to the tank 11 until the next watering. The carbon dioxide should preferably be connected at least 12 hours.

Irrespective of the outer conditions, a prescribed time schedule can be followed when the invention is applied and a quality assurance of the method and the product can be attained. Some obvious limits for the outer conditions must of course be considered, for example pelting rain and the risk of freezing. The method makes it possible to use lime plaster and lime wash paint also in the production of new buildings. Tests have shown that both the initial hardening and the final strength are improved when carbonated water is used in this way.

Carbonated water can also be used in brick laying with lime mortar. When making a brick wall. the final strength will be greater if the bricks are watered with carbonated water before made in contact with the mortar. The bricks can be dipped in the water or sprayed with the water. Usually, the faster hardening and the improved final strength are not essential for a plain brick wall. In certain cases, however, for example when repairing a very thick wall or when making an arch or the like, both the faster initial hardening and the improved final strength will be essential.

## Claims

1. A method of applying lime plaster and/or lime wash paint in layers,
**characterised in that**
after a layer of plaster or paint has been applied, one applies carbonated water onto the plaster or paint and then applies another layer of plaster or paint.

2. A method according to claim 1, **characterised in that** the water is applied when the plaster or paint has partly dried.

3. A method according to claim 1 or 2, **characterised in that** carbonated water is applied when the plastering is finished and before the painting begins.

4. A method according to claim 3, **characterised in that** not more than four layers of paint is applied and carbonated water is applied before each new painting.

5. A method according to any one of the preceding claims, **characterised in that** one applies one layer of plaster or paint a day.

6. A method according to claim 5, **characterised in that** a pressure vessel with water is pressurised with carbon dioxide and the carbon dioxide pressure is on for at least 6 hours before the carbonated water is used.

7. A method according to any one of the preceding claims, **characterised in that** the carbonated water is applied just before the next layer of plaster or paint is applied.

8. A method according to any one of the preceding claims,**characterised in that** the substructure is watered with carbonated water before a priming lime plaster or lime wash is applied.

9. A method of making a brick structure using lime mortar, **characterised in that** the bricks are watered with carbonated water before being made in contact with the mortar.

## Patentansprüche

1. Eine Methode des Aufbringens von Kalkputz und/oder Kalkanstrich in Schichten,
gekennzeichnet dadurch, dass
nach Aufbringen einer Putzschicht oder eines Anstrichs kohlensäurehaltiges Wasser auf den Putz oder den Anstrich aufgebracht wird und darauf eine weitere Schicht Putz oder Anstrich.

2. Eine Methode nach Anspruch 1, gekennzeichnet dadurch, dass das Wasser aufgebracht wird, wenn der Putz oder Anstrich teilweise getrocknet ist.

3. Eine Methode nach Anspruch 1 oder 2, gekennzeichnet dadurch, dass kohlensäurehaltig Wasser aufgebracht wird, wenn das Verputzen beendet ist und bevor das Anstreichen beginnt.

4. Eine Methode nach Anspruch 3, gekennzeichnet dadurch, dass nicht mehr als vier Anstrichschichten aufgebracht werden und vor jedem neuem Anstrich kohlensäurehaltig Wasser aufgebracht wird.

5. Eine Methode nach einem beliebigen der vorangehenden Patentansprüche, gekennzeichnet dadurch, dass eine Putzschicht oder ein Anstrich pro Tag aufgebracht wird.

6. Eine Methode nach Anspruch 5, gekennzeichnet dadurch, dass ein Druckgefäß mit Wasser mittels Kohlendioxyd unter inneren Überdruck gesetzt wird und dass der Kohlendioxyddruck mindestens 6 Stunden lang wirkt, bevor das kohlensäurehaltige Wasser benutzt wird.

7. Eine Methode nach einem beliebigen der vorangehenden Patentansprüche, gekennzeichnet dadurch, dass das kohlensäurehaltige Wasser unmittelbar vor Aufbringen der nächsten Putz- oder Anstrichschicht aufgebracht wird.

8. Eine Methode nach einem beliebigen der vorangehenden Patentansprüche, gekennzeichnet dadurch, dass die Unterstruktur mit kohlensäurehaltigem Wasser benässt wird, bevor ein Grundierungskalkputz oder Kalkanstrich aufgebracht wird.

9. Eine Methode zum Herstellen einer Ziegelsteinstruktur unter Verwendung von Kalkmörtel, gekennzeichnet dadurch, dass die Ziegel mit kohlensäurehaltigem Wasser benässt werden, bevor sie in Kontakt mit dem Mörtel kommen.

## Revendications

1. Une méthode d'appliquer de l'enduit de chaux lisse et/ou peinture à la chaux en couches,
caractérisé en ce que
après qu'une couche d'enduit ou peinture a été appliquée, on applique de l'eau carbonique sur l'enduit ou sur la peinture et puis une autre couche d'enduit ou de peinture.

2. Un procédé selon la revendication 1, caractérisé en ce que l'eau est appliquée quand l'enduit ou la peinture est partiellement séchée.

3. Un procédé selon la revendication 1 ou 2, caractérisé en ce que de l'eau carbonique est appliquée quand l'enduit est fini et avant que la peinture commence.

4. Un procédé selon la revendication 3, caractérisé en ce qu'au plus quatre couches de peinture sont appliquées et que de l'eau carbonique est appliquée avant chaque nouvelle peinture.

5. Une méthode selon n'importe quelle des revendications précédentes, caractérisé en ce qu'on applique une couche d'enduit ou peinture par jour.

6. Un procédé selon la revendication 5, caractérisé en ce qu'un vaisseau de pression avec de l'eau est mis à surpression interne avec dioxyde de carbone et la pression de dioxyde de carbone est active pour au moins 6 heures avant d'utiliser l'eau carbonique.

7. Une méthode selon n'importe quelle des revendications précédentes, caractérisé en ce que l'eau carbonique est appliquée juste avant d'appliquer la prochaine couche d'enduit ou de peinture.

8. Une méthode selon n'importe quelle des revendications précédentes, caractérisé en ce que la substructure est arrosée avec de l'eau carbonique avant d'appliquer un enduit de chaux lisse de fond ou peinture à la chaux.

9. Une méthode de produire une structure en briques en utilisant du mortier de chaux, caractérisé en ce que les briques sont arrosées avec de l'eau carbonique avant d'être portées en contact avec le mortier.
